# EUROPÄISCHE PATENTANMELDUNG

(11) **EP 1 814 008 A2**
(43) Veröffentlichungstag der Anmeldung: **01.08.2007**
(21) Anmeldenummer: 06021288.3
(22) Anmeldetag: 11.10.2006
(51) Int. Cl.: G05D 23/02

(54) **Thermostatisches Ventil**

(30) Priorität: 28.01.2006 DE 102006004053
(71) Anmelder: Gustav Wahler GmbH u. Co.KG, 73730 Esslingen (DE)
(72) Erfinder: Gebauer, Markus, 70563 Stuttgart (DE)
(74) Vertreter: Kratzsch, Volkhard

(57) **Zusammenfassung**

Die Erfindung betrifft ein thermostatisches Ventil (10), mit einem Ventilgehäuse (11), das im Inneren (15) beidseitig einer von einem Ventilsitz (17) umgebenen Ventilöffnung (16) Ventilräume (18, 19) enthält, die dem Zufluss bzw. Abfluss eines Mediums dienen, und mit einem zumindest ein die Ventilöffnung (16) beherrschendes Ventilelement (23) aufweisenden Thermostatelement (20), z. B. Dehnstoffelement, an dessen Gehäuse (21) das mindestens eine Ventilelement (23) gehalten ist und das mit einem relativ verschiebbaren Teil, z. B. einem Kolben (22), am Ventilgehäuse (11) abgestützt ist, wobei das Ventilelement (23) von einer Rückstellfeder (28) in Ventilschließrichtung beaufschlagt ist, die einerseits am Gehäuse (21) oder Ventilelement (23) und andererseits an einem Widerlager (29) abgestützt ist, das mittels Stegen (30, 31) am Ventilgehäuse (11) gehalten ist. Das Ventilgehäuse (11) weist ein separates Bauteil (40) auf, an dem zumindest die Stege (30, 31) für das Widerlager (29) einstückig ausgebildet sind. Das Bauteil (40) ist aus hochbeanspruchbarem Material geformt und in das aus z. B. standardisiertem Kunststoffmaterial bestehende Ventilgehäuse (11) eingespritzt oder eingegossen (Fig.).

## Beschreibung

Die Erfindung bezieht sich auf ein thermostatisches Ventil der im Oberbegriff des Anspruchs 1 definierten Art.

Es ist ein thermostatisches Ventil dieser Art bekannt (EP 0 600 150 B1), bei dem das Ventilgehäuse aus einem Deckelteil besteht, der mit einem damit einstückigen Rohransatz versehen ist und etwa auf Höhe der Ventilöffnung und des Ventilsitzes einen Ringteil aufweist, in den der Ventilsitz eingearbeitet ist. Mit dem Ringteil sind einstückig zwei etwa diametral gegenüberliegende Stege verbunden, die als Kurzstege und zum Einhängen eines Widerlagerbügels ausgebildet sind. Damit ein solches Ventil dauerhaft den Beanspruchungen standhält, denen dieses Ventil, insbesondere das einstückige Ventilgehäuse, ausgesetzt ist, ist es erforderlich, das einstückige Ventilgehäuse aus entsprechendem Kunststoffmaterial herzustellen, das den Anforderungen genügt. Dies ist kostenaufwändig.

Der Erfindung liegt die Aufgabe zugrunde, ein thermostatisches Ventil der eingangs genannten Art zu schaffen, das eine hohe Formbeständigkeit und Dauerfestigkeit des Ventilgehäuses ohne Veränderung des Arbeitsbereichs des Ventils gewährleistet.

Die Aufgabe ist bei einem thermostatischen Ventil der eingangs genannten Art erfindungsgemäß durch die Merkmale im Anspruch 1 gelöst. Weitere vorteilhafte Erfindungsmerkmale sowie Ausgestaltungen ergeben sich aus den Unteransprüchen. Dadurch, dass das Ventilgehäuse ein separates Bauteil aufweist, an dem zumindest die Stege für das Widerlager einstückig ausgebildet sind, und das Bauteil aus hochbeanspruchbarem Kunststoff oder aus Metall geformt und in das aus z.B. standardisiertem Kunststoffmaterial bestehende Ventilgehäuse eingespritzt oder eingegossen ist, ist in einfacher Weise ein hinsichtlich der Herstellungskosten verbilligtes thermostatisches Ventil geschaffen, bei dem die Formbeständigkeit und Dauerfestigkeit des gesamten Ventilgehäuses, insbesondere zumindest der Stege, wesentlich gesteigert ist. Dabei versteht es sich, dass sich hinsichtlich der besonderen Gestaltung der Stege und des damit zusammenwirkenden Widerlagers gleichermaßen die besonderen Merkmale zusätzlich nutzen lassen, die in EP 0600150 B1 gezeigt und beschrieben sind, auf die zur Vermeidung von Wiederholungen dieser besonderen Merkmale hiermit ausdrücklich Bezug genommen ist. In vorteilhafter Weise ist das separate Bauteil z.B. aus PPS-Kunststoffmaterial gebildet, das auch großen Kräften Stand hält. Das übrige Ventilgehäuse hingegen kann z.B. aus PA und damit aus wesentlich kostengünstigerem Kunststoffmaterial gebildet sein. Durch diese Materialpaarung lassen sich in einfacher Weise die Kosten für das thermostatische Ventil deutlich reduzieren bei gleichzeitiger Sicherung hoher Beanspruchbarkeit der Elemente, die besonderen Kräften und Beanspruchungen ausgesetzt sind.

Weitere Einzelheiten und Vorteile der Erfindung ergeben sich aus der nachfolgenden Beschreibung.

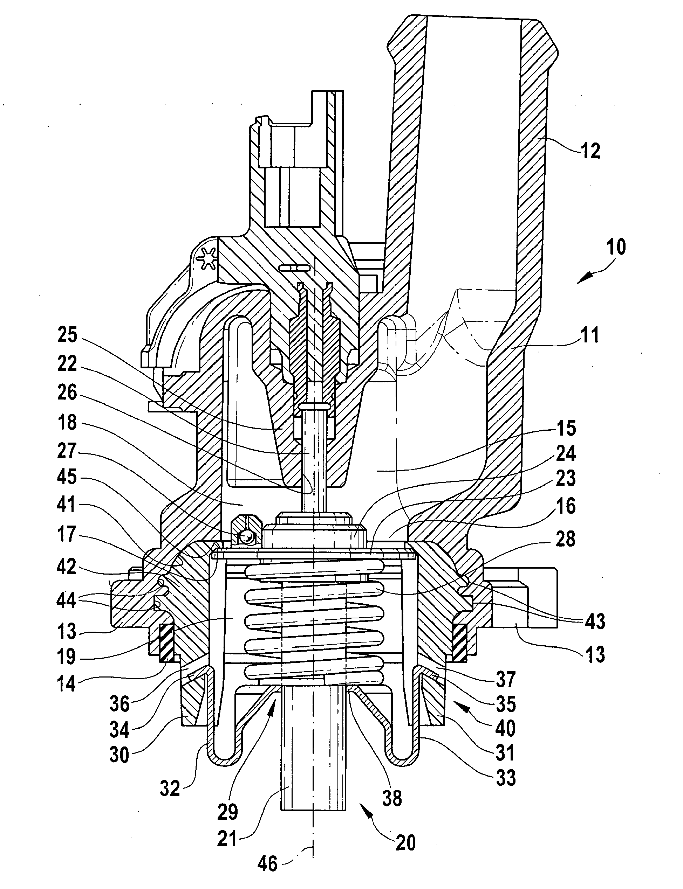

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben. Dabei sind alle in der vorstehenden und nachfolgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in der Zeichnung gezeigten Ausführungsbeispieles näher erläutert. Die Zeichnung zeigt einen schematischen senkrechten Schnitt mit teilweiser Seitenansicht eines thermostatischen Ventils.

In der Zeichnung ist ein thermostatisches Ventil 10 gezeigt, das sich in Schließstellung befindet. Das Ventil 10 hat ein Ventilgehäuse 11 mit einem damit einstückigen Rohransatz 12 zum Anschluss an eine nicht gezeigte Leitung. Das Ventilgehäuse 11 ist auf der in der Zeichnung unten befindlichen Seite offen und weist dort einen Ringteil 13 auf, der bei der Befestigung des Ventilgehäuses 11 an einem nicht weiter gezeigten Gehäuse auf letzterem aufliegt, wobei zwischen dem Ringteil 13 und dem nicht gezeigten Gehäuse eine Abdichtung mittels eines Dichtungsringes 14 erfolgt.

Das Ventilgehäuse 11 enthält im Inneren 15 eine Ventilöffnung 16, die von einem Ventilsitz 17 umgeben ist. Beidseitig der Ventilöffnung 16 sind Ventilräume 18 und 19 gebildet, die dem Zufluss bzw. Abfluss eines zu steuernden Mediums dienen.

Das Ventil 10 weist ferner ein Thermostatelement 20 auf, das z. B. als Dehnstoffelement ausgebildet ist und ein Gehäuse 21 mit darin enthaltenem, bei Temperaturerhöhung sich ausdehnendem Dehnstoff, z. B. Wachs, aufweist, wobei in das Gehäuse 21, insbesondere in den darin enthaltenen Dehnstoff, ein Kolben 22 eintaucht, der im Inneren eine nicht weiter dargestellte Heizeinrichtung enthalten kann. Der Kolben 22 und das Gehäuse 21 des Thermostatelements 20 sind relativ zueinander verschiebbar in Abhängigkeit von der Erwärmung bzw. Abkühlung des im Gehäuse 21 enthaltenen Dehnstoffs. Das Thermostatelement 20 trägt auf seinem Gehäuse 21 ein z. B. tellerförmiges Ventilelement 23, das an einem Gehäuseabsatz 24 in der einen Richtung abgestützt ist. Das Ventilelement 23 wirkt mit dem Ventilsitz 17 im Ventilgehäuse 11 zur Steuerung der Ventilöffnung 16 zusammen. In der gezeigten Stellung sitzt das tellerförmige Ventilelement 23 auf dem Ventilsitz 17 auf und verschließt die Ventilöffnung 16, so dass kein Mediumdurchfluss zwischen den beiden Ventilräumen 18 und 19 möglich ist. Wird das Ventilelement 23 hingegen in der Darstellung nach unten bewegt, so hebt dieses vom Ventilsitz 17 unter Freigabe der Ventilöffnung 16 ab, so dass ein Mediumdurchgang im Bereich der Ventilöffnung 16 zwischen den Ventilräumen 18 und 19 möglich ist.

Das Ventilgehäuse 11 enthält in Abstand oberhalb der Ventilöffnung 16 ein damit einstückiges Abstützglied 25 mit nach unten offener Bohrung 26, in die der Kolben 22 eingreift, der endseitig axial darin abgestützt ist. Mit 27 ist schematisch ein in das Ventilelement 23 integriertes zusätzliches und an sich bekanntes Kugelventil angedeutet.

Das Ventilelement 23 ist von einer Rückstellfeder 28 in Ventilschließrichtung beaufschlagt, die hier z. B. als zylindrische Schraubenfeder ausgebildet ist, die das Gehäuse 21 umgibt und mit ihrem in der Zeichnung oberen Ende am Ventilelement 23 oder dann am Gehäuse 21 abgestützt ist, wenn das Ventilelement 23 mit dem Gehäuse 21 fest und unverschiebbar verbunden ist. Das andere, in der Zeichnung unten befindliche Ende der Rückstellfeder 28 ist an einem Widerlager 29 abgestützt, das mittels z. B. zweier Stege 30, 31 am Ventilgehäuse 11 gehalten ist. Die Stege 30, 31 können einander diametral gegenüberliegen und ähnlich nach unten abstehenden Armen gebildet sein, wie diese z. B. in EP 0 600 150 B1 gezeigt und beschrieben sind. Das Widerlager 29 weist z. B. beidseitige Schenkel 32 und 33 mit endseitigen Haken 34 bzw. 35 auf, die in zugeordnete Einhängeöffnungen 36, 37 der Stege 30, 31 eingreifen können. Die Schenkel 32, 33 sind über einen damit einstückigen Querteil 38 verbunden, der im Zentrum einen Durchlass für das hindurchreichende Gehäuse 21 enthält. Die besondere Gestaltung der Stege 30, 31 und Schenkel 32, 33 mit Haken 34 bzw. 35 kann entsprechend EP 0 600 150 B1 gewählt sein.

Das Ventilgehäuse 11 weist ein separates Bauteil 40 auf, an dem zumindest die Stege 30, 31 für das Widerlager 29 einstückig ausgebildet sind. Dieses Bauteil 40 ist aus Metall oder insbesondere aus einem hochbeanspruchbaren Kunststoffmaterial geformt, insbesondere aus Polyphenylensulfid (PPS). Das Bauteil 40 ist in das aus anderem, z. B. standardisiertem, Kunststoffmaterial bestehende Ventilgehäuse 11 eingespritzt oder eingegossen, auf jeden Fall bei der Formgebung des Ventilgehäuses 11 in die Form eingelegt und mit diesem zu einem Gehäuse gebildet. Dabei ist das Bauteil 40 bei der Herstellung des Ventilgehäuses 11 in dieses eingespritzt oder eingegossen. Das Ventilgehäuse 11 besteht z. B. aus Polyamid (PA). Dieser Werkstoff ist ausreichend für die Beanspruchungen, denen das Ventilgehäuse 11 ausgesetzt ist. Das hochbeanspruchbare Kunststoffmaterial, aus dem hingegen das Bauteil 40 besteht, ist in der Lage, den Beanspruchungen zu genügen, denen dieses Bauteil 40 insbesondere hinsichtlich der Stege 30, 31 ausgesetzt ist, insbesondere den Kräften, die von der Rückstellfeder 38 her wirksam sind und in der Schließstellung des Ventils 10 und insbesondere bei der Öffnungsbewegung, bei der die Rückstellfeder 28 stärker zusammengedrückt wird, wirken. Diese Kräfteproblematik ist an sich bekannt und ebenfalls in EP 0 600 150 B1 beschrieben, auf die Bezug genommen wird. Dadurch, dass lediglich das Bauteil 40 mit zumindest den Stegen 30, 31 aus entsprechendem hochbeanspruchbarem Kunststoffmaterial und damit aus teurem Material gebildet ist, der übrige Teil des Ventilgehäuses 11 hingegen aus standardisiertem Kunststoffmaterial, das kostengünstiger ist, ist hinsichtlich der Materialgestaltung und damit hinsichtlich der Kosten den Beanspruchungen, denen dieses Ventil 10 ausgesetzt ist, in hohem Maße Rechnung getragen worden. Das Ventil 10 ist dadurch einerseits kostengünstig und andererseits in hohem Maße standfest und gewährleistet eine lange Lebensdauer. Die Gefahr eines etwaigen Kriechens des Materials der Stege 30, 31 besteht nicht. Der Arbeitsbereich des Ventils 10, der bei dessen Herstellung eingestellt ist, verändert sich im Laufe der Zeit nicht.

Das Ventilgehäuse 11 weist eine innere Ringaufnahme 41 auf, an die das Bauteil 40 angepasst ist und in die letzteres eingespritzt oder eingegossen ist. Das Bauteil 40 weist einen an die Ringaufnahme 41 angepassten Ringteil 42 auf, der in der Ringaufnahme 41 enthalten ist, wobei der Ringteil 42 einen auf einer Seite der Ventilöffnung 16 befindlichen Ventilraum 19 umgrenzt. Zwischen dem Ventilgehäuse 11 und dem separaten Bauteil 40 sind formschlüssige Ankermittel wirksam, die aus mindestens einem radial abstehenden Vorsprung 43 einerseits und mindestens einer diesem Vorsprung 43 zugeordneten radialen Ausnehmung 44 andererseits gebildet sind, in die der mindestens eine Vorsprung 43 eingreift. Beim gezeigten Ausführungsbeispiel sind als Vorsprünge 43 z. B. zwei axial beabstandete Stege oder Rippen vorgesehen, die mit dem Bauteil 40 einstückig sind. Als Ausnehmungen 44 sind diesen Stegen oder Rippen entsprechende Nuten oder Schlitze vorgesehen, die in der Ringaufnahme 41 des Ventilgehäuses 11 enthalten sind. Als radial abstehende Vorsprünge 43 können auch umlaufende Ringrippen und als entsprechend angepasste Ausnehmungen 44 umlaufende Nuten vorgesehen sein. Von Vorteil können auch solche Ankermittel sein, die als Gewinde oder zumindest gewindeähnlich ausgebildet sind. Auch einzelne radial abstehende Stifte als Vorsprünge 43 und diesen zugeordnete Bohrungen als Ausnehmungen 44 liegen im Rahmen der Erfindung wie auch alle sonstigen, dem Fachmann geläufigen Ankermittel, die formschlüssig wirksam sind.

Beim gezeigten Ausführungsbeispiel ist das Bauteil 40 so gestaltet, dass an dessen Ringteil 42 von diesem etwa achsparallel abstehende Stege 30, 31 mit Einhängeöffnungen 36, 37 für die Schenkel 32, 33 eines bügelförmigen Widerlagers 29 ausgebildet sind. Auch die Ventilöffnung 16 und der diese umgebende Ventilsitz 17 sind beim gezeigten Ausführungsbeispiel Bestandteil des Bauteils 40 und einstückig damit ausgebildet. Damit sind die Bereiche aus Metall oder hochbeanspruchbarem Kunststoffmaterial des Bauteils 40 gebildet, die unter der Federwirkung der Rückstellfeder 28 auf Zug beansprucht sind. Die Ringaufnahme 41 des Ventilgehäuses 11 ist etwa auf dem Axialbereich des Ventilsitzes 17 mit einer Bodenfläche 45 versehen, die sich in einer Ebene erstreckt, die etwa rechtwinklig zur Längsmittelachse 46 des Thermostatelements 20 verläuft. Der Ringteil 42 verläuft im zugeordneten Bereich etwa kuppelförmig unter Bildung einer entsprechend der Bodenfläche 45 verlaufenden Stirnfläche, mit der das Bauteil 40 axial an der Bodenfläche 45 abgestützt ist. Auf Grund der Kuppelbauweise ist eine gute und genaue radiale Zentrierung und axiale Abstützung des Bauteils 40 innerhalb der Ringaufnahme 41 erreicht und damit eine reproduzierbare Relativposition des Bauteils 40 in Bezug auf das Ventilgehäuse 11, wodurch eine prozesssichere Herstellung gefördert ist.

Bei einem anderen, nicht gezeigten Ausführungsbeispiel besteht das Bauteil 40 lediglich aus dem Ringteil 42 und den damit einstückigen Stegen 30, 31, wobei die Ventilsitzfläche 17 Bestandteil des Ventilgehäuses 11 und nicht des Bauteils 40 ist.

Bei einem anderen, nicht gezeigten Ausführungsbeispiel sind die abstehenden Stege 30, 31 endseitig über einen damit einstückigen Querteil miteinander verbunden, an dem das zugeordnete Ende der Rückstellfeder 28 abgestützt ist. Hierbei bildet dieser mit den Stegen 30, 31 einstückige Querteil das Widerlager für die Rückstellfeder 28, so dass es eines besonderen einsetzbaren Bügels mit Schenkeln 32, 33 und Querteil 38 nicht bedarf. Dabei versteht es sich, dass ein solcher mit den Stegen 30, 31 einstückiger Querteil in gleicher Weise wie der Querteil 38 mit einem zentralen Durchlass für das Gehäuse 21 versehen ist. Auch hierbei kann das Bauteil 40 so beschaffen sein, dass einstückig damit auch der Ventilsitz 17 gebildet ist. Statt dessen kann der Ringteil 42 auch in Abstand von einem an Ventilgehäuse 11 ausgebildeten Ventilsitz 17 enden.

## Patentansprüche

1. Thermostatisches Ventil, mit einem Ventilgehäuse (11), das im Inneren (15) beidseitig einer von einem Ventilsitz (17) umgebenen Ventilöffnung (16) Ventilräume (18, 19) enthält, die dem Zufluss bzw. Abfluss eines Mediums dienen, und mit einem zumindest ein die Ventilöffnung (16) beherrschendes Ventilelement (23) auf weisenden Thermostatelement (20), z. B. Dehnstoffelement, an dessen Gehäuse (21) das mindestens eine Ventilelement (23) gehalten ist und das mit einem relativ verschiebbaren Teil, z. B. einem Kolben (22), am Ventilgehäuse (11) abgestützt ist, wobei das Ventilelement (23) von einer Rückstellfeder (28) in Schließrichtung beaufschlagt ist, die einerseits am Gehäuse (21) oder Ventilelement (23) und andererseits an einem Widerlager (29) abgestützt ist, das mittels Stegen (30, 31) am Ventilgehäuse (11) gehalten ist,
**dadurch gekennzeichnet,**
**dass** das Ventilgehäuse (11) ein separates Bauteil (40) aufweist, an dem zumindest die Stege (30, 31) für das Widerlager (29) einstückig ausgebildet sind, und dass das Bauteil (40) aus hochbeanspruchbarem Material besteht und in das aus z. B. standardisiertem Kunststoffmaterial bestehende Ventilgehäuse (11) einspritzt oder eingegossen ist.

2. Thermostatisches Ventil nach Anspruch 1,
**dadurch gekennzeichnet,**
**dass** das separate Bauteil (40) bei der Herstellung des Ventilgehäuses (11) in dieses eingespritzt oder eingegossen ist.

3. Thermostatisches Ventil nach Anspruch 1 oder 2,
**dadurch gekennzeichnet,**
**dass** das Ventilgehäuse (11) eine innere Ringaufnahme (41) aufweist und das separate Bauteil (40) in die innere Ringaufnahme (41) eingespritzt oder eingegossen ist.

4. Thermostatisches Ventil nach Anspruch 3,
**dadurch gekennzeichnet,**
**dass** das separate Bauteil (40) einen Ringteil (42) aufweist, der in der Ringaufnahme (41) enthalten ist.

5. Thermostatisches Ventil nach Anspruch 4,
**dadurch gekennzeichnet,**
**dass** der Ringteil (42) einen auf einer Seite der Ventilöffnung (16) befindlichen Ventilraum (19) umgrenzt.

6. Thermostatisches Ventil nach einem der Ansprüche 1 bis 5,
**dadurch gekennzeichnet,**
**dass** zwischen dem Ventilgehäuse (11) und dem separaten Bauteil (40) formschlüssige Ankermittel wirksam sind.

7. Thermostatisches Ventil nach Anspruch 6,
**dadurch gekennzeichnet,**
**dass** die Ankermittel aus mindestens einem radial abstehenden Vorsprung (43) einerseits und mindestens einer dem Vorsprung (43) zugeordneten radialen Ausnehmung (44) andererseits gebildet sind, in die der mindestens eine Vorsprung (42) formschlüssig eingreift.

8. Thermostatisches Ventil nach Anspruch 7,
**dadurch gekennzeichnet,**
**dass** der mindestens eine Vorsprung (43) als Steg, Stift, Rippe oder dergleichen und die mindestens eine Ausnehmung (44) als Bohrung, Nut oder dergleichen ausgebildet sind.

9. Thermostatisches Ventil nach einem der Ansprüche 1 bis 8,
**dadurch gekennzeichnet,**
**dass** am Ringteil (42) von diesem abstehende Stege (30, 31) mit Einhängeöffnungen (36, 37) für die Schenkel (32, 33) eines Widerlagerbügels ausgebildet sind.

10. Thermostatisches Ventil nach einem der Ansprüche 1 bis 8,
**dadurch gekennzeichnet,**
**dass** am Ringteil (42) von diesem abstehende Stege (30, 31), die endseitig über einen damit einstückigen Querteil miteinander verbunden sind, für die Abstützung der Rückstellfeder (28) ausgebildet sind.

11. Thermostatisches Ventil nach einem der Ansprüche 1 bis 10,
**dadurch gekennzeichnet,**
**dass** der Ringteil (42) in Abstand von dem am Ventilgehäuse (11) ausgebildeten Ventilsitz (17) endet.

12. Thermostatisches Ventil nach einem der Ansprüche 1 bis 10,
**dadurch gekennzeichnet,**
**dass** am Ringteil (42) die Ventilöffnung (16) mit dem diese umgebenden Ventilsitz (17) einstückig damit ausgebildet sind.

13. Thermostatisches Ventil nach einem der Ansprüche 1 bis 12,
**dadurch gekennzeichnet,**
**dass** das separate Bauteil (40) aus hochbeanspruchbarem Kunststoff oder aus Metall gebildet ist.

14. Thermostatisches Ventil nach einem der Ansprüche 1 bis 13,
**dadurch gekennzeichnet,**
**dass** das separate Bauteil (40) aus Polyphenylensulfid (PPS) gebildet ist.

15. Thermostatisches Ventil nach einem der Ansprüche 1 bis 14,
**dadurch gekennzeichnet,**
**dass** das Ventilgehäuse (11) aus Polyamid (PA) gebildet ist.
